# FASCICULE DE BREVET EUROPEEN

(11) **EP 2 402 640 B1**
(45) Date de publication et mention de la délivrance du brevet: **16.01.2013**
(21) Numéro de dépôt: 11171382.2
(22) Date de dépôt: 24.06.2011
(51) Int. Cl.: F16L 37/14

(54) **Dispositif de raccordement verrouillable pour transfert de fluide, et son procédé de verrouillage**
Verschließbare Anschlussvorrichtung für den Transfer eines Fluids, und ihr Verschlussverfahren
Lockable connection device for fluid transfer, and its locking method

(30) Priorité: 30.06.2010 FR 1002723
(43) Date de publication de la demande: 04.01.2012
(73) Titulaire: HUTCHINSON, 75008 Paris (FR)
(72) Inventeur: Faillu, Jean-Luc, 45700 Villemandeur (FR); Bongiorni, Jean-Baptiste, 45200 Montargis (FR)
(74) Mandataire: Bolinches, Michel Jean-Marie

(56) Documents cités:
- FR-A1- 2 855 590
- FR-A1- 2 891 889
- US-A1- 2004 183 301

## Description

La présente invention concerne un dispositif de raccordement pour transfert de fluide en particulier pour un circuit d'admission d'air d'un véhicule automobile, et un procédé de verrouillage de ce dispositif de raccordement.

D'une manière générale dans un circuit de transfert de fluide pour véhicule automobile, il est connu, pour raccorder un tuyau souple ou rigide à un embout mâle verrouillable via une saillie qu'il présente sur sa périphérie, d'utiliser un dispositif de raccordement incorporant un connecteur femelle recevant un connecteur mâle (par exemple par clipsage ou soudage) que l'on raccorde à ce tuyau, un joint d'étanchéité annulaire plaqué contre l'embout mâle une fois ce dernier emmanché dans le connecteur femelle, et une épingle de verrouillage insérée à travers le connecteur femelle pour y bloquer l'embout mâle en position rentrée verrouillée. On peut par exemple citer le document FR-B1-2 891 889 pour la description d'un tel dispositif de raccordement verrouillable.

Un inconvénient majeur des dispositifs de raccordement connus réside dans le caractère imparfait du verrouillage obtenu lorsque l'épingle est en position rentrée par rapport au connecteur femelle, notamment en raison d'un jeu de montage radial et également axial entre le connecteur femelle et l'embout mâle.

Un autre inconvénient de ces dispositifs connus réside dans l'absence de moyens pour s'assurer d'un verrouillage correct de l'épingle par rapport à la saillie de l'embout mâle, i.e. d'un témoin de verrouillage précis de cette épingle lorsque l'embout mâle a été convenablement inséré dans le connecteur femelle.

Un but de la présente invention est de proposer un dispositif de raccordement pour transfert de fluide qui remédie notamment à ces inconvénients, et qui comprend :
- un connecteur tubulaire femelle qui est destiné à recevoir un connecteur tubulaire mâle et qui est destiné à être raccordé de manière verrouillable à un embout tubulaire mâle présentant une saillie périphérique avec interposition d'au moins un joint d'étanchéité annulaire radialement entre l'embout mâle et le connecteur femelle, et
- une épingle de verrouillage de l'embout qui est montée sur le connecteur femelle et qui présente sensiblement une forme de U à une tête se prolongeant par deux ailes montées traversantes dans une paroi globalement cylindrique du connecteur femelle et à deux extrémités dépassant radialement de ladite paroi, l'épingle étant apte à occuper des positions sortie et rentrée respectivement non verrouillée et verrouillée contre ladite saillie, l'embout mâle présentant un premier tronçon de diamètre D1 servant de portée pour ledit au moins joint et un tronçon de serrage recevant l'épingle en position verrouillée et de diamètre D3 inférieur à D1.

A cet effet, un dispositif selon l'invention est tel que le connecteur femelle comprend des moyens de guidage des extrémités d'épingle qui sont formés radialement à l'extérieur de ladite paroi et avec lesquels ces extrémités coopèrent pour n'autoriser le passage de l'épingle en position verrouillée que si l'embout mâle est inséré dans le connecteur femelle dans une position de pré-verrouillage où sa saillie est située derrière les ailes d'épingle, le connecteur femelle comportant une butée anti-verrouillage s'opposant à l'obtention de la position verrouillée de l'épingle lorsque l'embout mâle n'est pas en position de pré-verrouillage par rapport à l'épingle.

Dans la présente description, les expressions « derrière » et « devant » désignent respectivement des positionnements relatifs selon l'axe de symétrie du connecteur femelle et de l'embout mâle qui sont localisés axialement vers l'intérieur par rapport à la direction d'insertion de l'embout mâle (i.e. axialement au-delà) et axialement vers l'extérieur par rapport à cette direction (i.e. axialement en deçà).

On notera que ce dispositif de raccordement selon l'invention permet ainsi non seulement d'assurer le verrouillage de l'embout à l'intérieur du connecteur femelle mais en outre de témoigner visuellement du bon verrouillage de l'embout dans ce connecteur femelle, via la nécessité absolue de positionner au préalable l'embout en position de pré-verrouillage par rapport à l'épingle, pour pouvoir faire passer celle-ci de sa position sortie non verrouillée à sa position rentrée verrouillée.

Outre le fait que le dispositif selon l'invention forme un témoin visuel de verrouillage du raccordement, on notera que la différence précitée de diamètres d'embout D1 et D3 (D3 < D1) entre le tronçon de portée pour le(s) joint(s) et le tronçon de serrage de l'épingle est indispensable au fonctionnement de ce dispositif de l'invention.

Selon une autre caractéristique de l'invention, lesdits moyens de guidage peuvent comprendre une paire de premières rainures formées dans le connecteur femelle et respectivement aptes à guider les deux extrémités d'épingle de la position non verrouillée à la position verrouillée en les rapprochant radialement l'une de l'autre, une fois l'embout amené en position de pré-verrouillage par rapport à l'épingle, de sorte que ces premières rainures permettent de minimiser le jeu radial de montage entre l'épingle et l'embout en position verrouillée. Ces premières rainures, symétriques l'une de l'autre par rapport à un plan axial médian du connecteur femelle, convergent obliquement l'une vers l'autre et vers le bas de ce connecteur femelle qui est opposé à la tête d'épingle.

Avantageusement, chaque première rainure peut être délimitée latéralement par une rampe radialement interne qui est adjacente à ladite paroi et contre laquelle se trouve l'extrémité d'épingle correspondante avant insertion de l'embout mâle dans le connecteur femelle et en position de pré-verrouillage non verrouillée de l'épingle, et par une rampe radialement externe qui est distale par rapport à ladite paroi et contre laquelle se trouve cette extrémité d'épingle en position de pré-verrouillage verrouillée.

Avantageusement, ladite rampe externe peut être définie par :
- un rebord supérieur formant la butée anti-verrouillage, et par
- une portion oblique inclinée d'un angle obtus par rapport à ce rebord et recevant l'extrémité correspondante d'épingle lorsque l'embout mâle est en position verrouillée.

On notera toutefois que cette butée anti-verrouillage pourrait en variante être formée indépendamment de la rampe externe.

Quant à ladite rampe interne, elle peut être définie par :
- une surface supérieure située au-dessus dudit rebord et comprenant un tronçon oblique, les tronçons obliques respectifs des deux rampes internes divergeant vers le haut l'un par rapport à l'autre et étant conçus pour écarter radialement les deux extrémités d'épingle l'une de l'autre lors du démontage de l'épingle, et par
- une surface inférieure oblique située sensiblement en regard de ladite portion oblique, à laquelle elle est globalement parallèle.

On notera que les caractéristiques précitées de ces premières rainures de l'épingle présentent en outre l'avantage de rendre cette épingle imperdable, en ce sens qu'elle ne peut être extraite accidentellement du connecteur femelle dans sa position sortie.

Selon une autre caractéristique de l'invention, lesdits moyens de guidage peuvent comprendre une paire de secondes rainures formées dans le connecteur femelle et respectivement aptes à caler axialement les deux ailes d'épingle en position verrouillée une fois l'embout amené en position de pré-verrouillage par rapport à l'épingle, de sorte que ces secondes rainures permettent de minimiser le jeu axial de montage entre l'embout et le connecteur femelle en position verrouillée.

Avantageusement, chaque seconde rainure peut être formée sur une partie de la circonférence de ladite paroi en débouchant sur ladite première rainure et peut être en outre adaptée pour caler axialement, en position verrouillée, une partie de l'extrémité d'épingle correspondante.

Selon un exemple de réalisation de l'invention, les extrémités d'épingle sont toutes deux recourbées d'un même côté axial d'un plan transversal médian contenant sa tête et le reste de ses ailes, pour favoriser leur guidage par lesdits moyens de guidage. On notera néanmoins que ces extrémités d'épingle pourraient être en variante situées dans le plan de ces ailes, en étant recourbées ou non (i.e. par exemple à extrémités droites dans le prolongement des ailes).

De préférence et indépendamment de la forme recourbée ou non des extrémités d'épingle, cette épingle présente une section transversale sensiblement polygonale, de préférence globalement carrée.

Egalement avantageusement, ladite seconde rainure peut être définie par un bord arrière sensiblement vertical tourné vers l'extrémité recourbée correspondante de l'épingle, et par un bord avant sensiblement vertical à l'exception d'un décrochement oblique ayant pour effet de pousser l'aile correspondante d'épingle contre ce bord arrière en position verrouillée de sorte à réaliser ce calage axial.

Selon un autre aspect de l'invention, le dispositif de raccordement comprend en outre l'embout mâle, lequel est inséré radialement à l'intérieur du connecteur femelle et comprend, à partir de son extrémité axialement interne destinée à se trouver la plus à l'intérieur du connecteur femelle en position de pré-verrouillage :
- le premier tronçon de diamètre D1 globalement cylindrique,
- ladite saillie de forme globalement tronconique qui diverge à partir de ce premier tronçon pour atteindre un diamètre de saillie D2 supérieur à D1 puis qui se termine par une portion annulaire radiale,
- le tronçon de serrage de diamètre D3 inférieur à D1 formant un second tronçon cylindrique qui prolonge à angle droit cette portion radiale, et
- un troisième tronçon tronconique qui diverge à partir de ce second tronçon pour atteindre un diamètre D4 supérieur à D2.

Selon un exemple de réalisation de l'invention, la tête d'épingle est munie sur sa face interne d'un organe auxiliaire de verrouillage, par exemple en forme de pion, qui est conçu pour traverser radialement un orifice correspondant du connecteur femelle dans la position verrouillée de l'épingle en venant buter contre la saillie, formant ainsi un troisième point de verrouillage de l'embout en plus des deux ailes d'épingle.

On notera que cet organe auxiliaire de verrouillage est optionnel, et qu'il peut être rapporté sous cette tête d'épingle ou bien être formé d'un seul tenant avec celle-ci.

Le procédé de verrouillage selon l'invention d'un dispositif de raccordement tel que celui précité comprend :
a) une insertion progressive de l'embout mâle à l'intérieur du connecteur femelle pourvu de l'épingle en position sortie avec ses ailes qui traversent ladite paroi, jusqu'à ce que ladite saillie de l'embout vienne écarter radialement les ailes d'épingle l'une de l'autre puis soit amenée derrière ces ailes, de sorte que ces dernières soient positionnées contre cette saillie dans ladite position de pré-verrouillage, puis
b) uniquement dans cette position de pré-verrouillage, une poussée appliquée à la tête d'épingle radialement vers l'intérieur qui amène l'épingle de ladite position non verrouillée à ladite position verrouillée via un guidage des extrémités d'épingle par lesdits moyens de guidage.

Selon une autre caractéristique de l'invention, ce procédé peut comprendre à l'étape b) un guidage des deux extrémités d'épingle dans une paire de premières rainures du connecteur femelle de manière que ces extrémités se rapprochent radialement de l'embout lors de leur passage à ladite position verrouillée, pour minimiser le jeu radial de montage entre l'épingle et l'embout en position verrouillée.

Avantageusement, ce procédé peut comprendre en outre à l'étape b) un guidage en butée axiale des deux ailes d'épingle dans une paire de secondes rainures du connecteur femelle, de sorte à minimiser le jeu axial de montage entre l'embout et le connecteur femelle en position verrouillée.

Comme indiqué ci-dessus en référence au dispositif de raccordement, ce procédé selon l'invention peut comprendre optionnellement en outre un troisième point de verrouillage de l'épingle contre la saillie d'embout qui complète ceux réalisés par les ailes d'épingle et qui est obtenu en faisant coulisser en position rentrée, avec la tête d'épingle, un organe auxiliaire de verrouillage équipant cette tête dans un orifice du connecteur femelle, cet organe de verrouillage étant par exemple en forme de pion.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en demi-section axiale d'un dispositif de raccordement selon l'invention montrant le connecteur femelle solidaire du connecteur mâle et pourvu d'un joint d'étanchéité torique rapporté, avant montage de l'épingle de verrouillage et de l'embout mâle,
la figure 2 est une vue schématique partielle en demi-section axiale du dispositif de la figure 1 avec le connecteur femelle qui est équipé de l'épingle de verrouillage en position sortie, avant montage de l'embout mâle,
la figure 3 est une vue schématique partielle en demi-section axiale du dispositif de la figure 2 en position de pré-verrouillage de l'embout mâle inséré dans le connecteur femelle par rapport à l'épingle et en position verrouillée pour cette épingle,
les figures 4, 5 et 6 est sont des vues schématiques partielles en demi-section axiale d'un autre dispositif de raccordement selon l'invention à joint d'étanchéité annulaire de section rectangulaire, correspondant respectivement à une variante des figures 1, 2 et 3,
la figure 7 est une vue schématique partielle en demi-section axiale d'un embout mâle tel que celui des figures 3 et 6 qui est utilisable dans un dispositif de raccordement selon l'invention,
la figure 8 est une vue en perspective frontale d'un connecteur femelle équipé d'une épingle de verrouillage selon l'invention en position sortie non verrouillée (l'embout mâle n'étant pas visible),
la figure 9 est une vue partielle en perspective latérale du connecteur femelle de la figure 8 équipé de cette épingle en position rentrée,
la figure 10 est une vue schématique partielle en coupe transversale selon le plan X-X de la figure 8 du connecteur femelle équipé de l'épingle en position sortie avant insertion de l'embout mâle,
la figure 11 est une vue schématique partielle en coupe transversale du connecteur de la figure 10 dans lequel a été inséré l'embout mâle dans une position antérieure à celle de pré-verrouillage où la saillie écarte les ailes d'épingle,
la figure 12 est une vue schématique partielle en coupe transversale du connecteur de la figure 11 avec l'embout qui occupe la position de pré-verrouillage des figures 3 et 6 où sa saillie est derrière les ailes d'épingle, laquelle est en position sortie non verrouillée,
la figure 13 est une vue schématique partielle en coupe transversale du connecteur de la figure 12 avec l'embout qui occupe la position de pré-verrouillage et l'épingle la position rentrée verrouillée via son guidage par les moyens de guidage de ce connecteur,
la figure 14 est une vue partielle en perspective frontale du connecteur femelle de la figure 8 équipé de l'épingle dont les ailes sont écartées par la saillie de l'embout mâle dans la position de la figure 11,
la figure 15 est une vue partielle en perspective latérale du connecteur femelle de la figure 9 équipé de l'épingle en position rentrée verrouillée,
la figure 16 est une vue en perspective frontale du connecteur femelle de la figure 8 équipé de l'épingle en position rentrée verrouillée (l'embout mâle n'étant pas visible),
la figure 17 est une vue partielle de détail en coupe transversale du connecteur femelle des figures 8, 14 et 16 dans lequel est inséré l'embout mâle en position d'insertion initiale, montrant une extrémité d'épingle en position initiale sortie dans une première rainure de guidage,
la figure 18 est une vue partielle de détail en coupe transversale du connecteur de la figure 17 dans lequel est inséré l'embout mâle en position d'insertion intermédiaire, montrant l'extrémité d'épingle dans la première rainure de guidage en position sortie et écartée par la saillie,
la figure 19 est une vue partielle de détail en coupe transversale du connecteur de la figure 18 dans lequel est inséré l'embout mâle en position d'insertion finale de pré-verrouillage, montrant l'extrémité d'épingle dans la première rainure de guidage en position sortie non verrouillée analogue à celle de la figure 17,
la figure 20 est une vue partielle de détail en coupe transversale du connecteur de la figure 19 où l'embout mâle est en position de pré-verrouillage et l'extrémité d'épingle dans la première rainure de guidage en position rentrée verrouillée avec un resserrement radial,
la figure 21 est une vue partielle de détail en coupe transversale du connecteur de la figure 20 où l'embout mâle est en position de pré-verrouillage, montrant l'extrémité d'épingle dans la première rainure de guidage en position sortie et écartée en vue de son démontage,
la figure 22 est une vue partielle de détail en coupe transversale du connecteur de la figure 18 avec l'embout mâle en position d'insertion intermédiaire, montrant l'extrémité d'épingle qui bute dans la première rainure avec impossibilité de l'amener en position verrouillée si l'embout n'est pas en position de pré-verrouillage,
la figure 23 est une vue en perspective latérale d'une seconde rainure de guidage du connecteur femelle des figures 8, 9 et 14 à 16 recevant une aile d'épingle en position sortie de l'épingle,
la figure 24 est une vue schématique latérale d'une seconde rainure de guidage selon une variante de la figure 23 recevant également une aile d'épingle en position sortie,
la figure 25 est une vue en perspective latérale de la seconde rainure de guidage du connecteur femelle de la figure 23 recevant l'aile et l'extrémité d'épingle en position rentrée de l'épingle en la calant axialement,
la figure 26 est une vue schématique latérale de la seconde rainure de guidage selon la figure 24 recevant l'aile et l'extrémité d'épingle en position rentrée en la calant axialement,
la figure 27 est une vue partielle de détail en coupe transversale selon la plan XXVII-XXVII de la figure 24 du connecteur femelle dans lequel est inséré l'embout mâle en position d'insertion initiale ou intermédiaire, montrant l'extrémité d'épingle en position sortie dans la première rainure de guidage,
la figure 28 est une vue partielle de détail en coupe transversale du connecteur de la figure 27 dans lequel est inséré l'embout mâle en position finale de pré-verrouillage, montrant l'extrémité d'épingle en position rentrée verrouillée dans la première rainure de guidage,
la figure 29 est une vue partielle de détail en coupe transversale du connecteur de la figure 28 montrant l'extrémité d'épingle en buté avec impossibilité de l'amener en position verrouillée si l'embout n'est pas en position de pré-verrouillage,
la figure 30 est une vue schématique partielle en demi-section axiale d'un dispositif de raccordement selon une variante de l'invention montrant un connecteur femelle solidaire d'un connecteur mâle et pourvu d'un joint à l'instar de la figure 2, avant montage de l'embout, mais avec le connecteur femelle qui est équipé d'une autre épingle de verrouillage en position sortie,
la figure 31 est une vue schématique partielle en demi-section axiale du dispositif de la figure 30 en position de pré-verrouillage de l'embout inséré dans le connecteur femelle par rapport à l'épingle et en position verrouillée pour cette épingle.

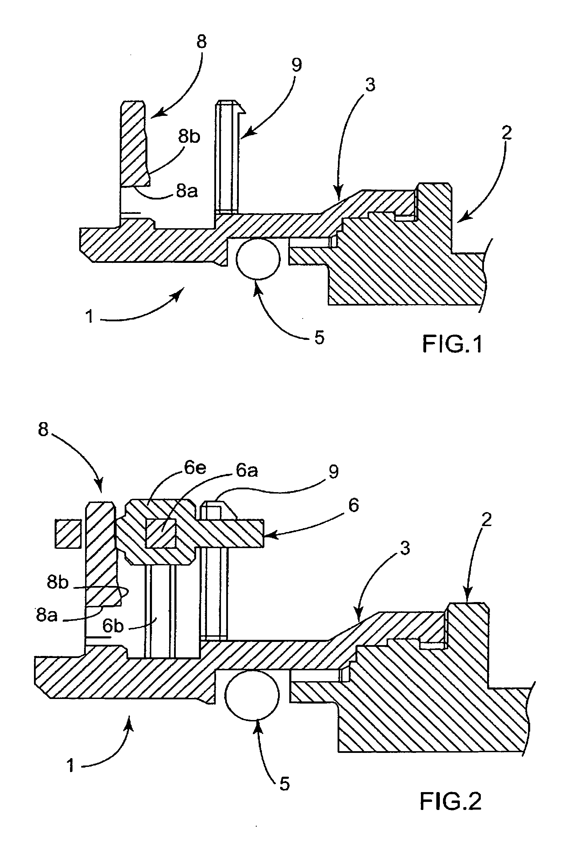

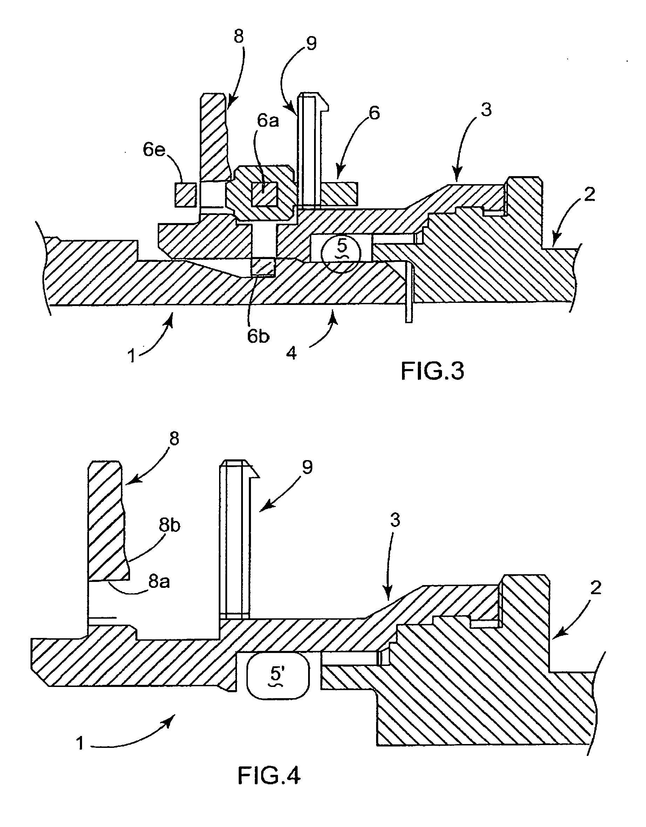

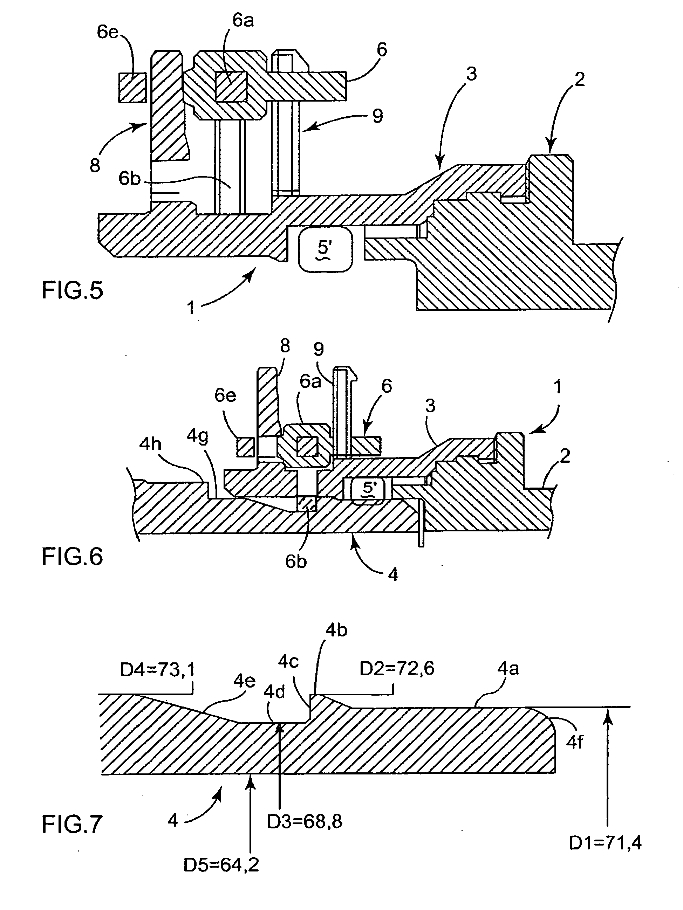

Le dispositif de raccordement 1 de la figure 1 est notamment utilisable dans un circuit d'admission d'air d'un véhicule automobile, et il comprend essentiellement :
- un connecteur tubulaire mâle 2 destiné à recevoir un tuyau souple ou rigide en un côté du raccordement,
- un connecteur tubulaire femelle 3 qui est destiné à recevoir le connecteur mâle 2 en étant solidarisé à ce dernier (par exemple par soudage dans l'exemple des figures 1 à 6, étant précisé qu'une solidarisation par clipsage ou par toute autre manière appropriée est également envisageable) et qui est destiné à être raccordé de manière verrouillable à un embout tubulaire mâle 4 de l'autre côté du raccordement,
- cet embout mâle métallique 4 (voir figures 3, 6 et surtout figure 7) qui présente, à partir de son extrémité axialement interne, un premier tronçon cylindrique 4a de diamètre D1, une saillie tronconique 4b qui diverge à partir du tronçon 4a pour atteindre un diamètre D2 puis qui se termine par une portion annulaire radiale 4c, un second tronçon cylindrique 4d de diamètre D3 qui prolonge à angle droit la portion radiale 4c, et un troisième tronçon tronconique 4e qui diverge à partir du tronçon 4d pour atteindre un diamètre D4 (avec D3 < D1 < D2 < D4),

- au moins un joint d'étanchéité annulaire 5, 5' interposé radialement entre et contre l'embout mâle 4 et le connecteur femelle 3 à proximité immédiate du connecteur mâle 2 (ce joint 5 pouvant être torique comme aux figures 1 à 3 ou de section non circulaire par exemple sensiblement carrée comme le joint 5' des figures 4 à 6, ce joint 5 pouvant être tant rapporté librement que solidaire du connecteur femelle 3 par exemple par surmoulage), et
- une épingle métallique de verrouillage 6 de l'embout 4 qui est montée sur le connecteur femelle 3 et qui présente sensiblement une forme de U avec une tête 6a chevauchant le connecteur 3 et se prolongeant par deux ailes 6b montées traversantes dans des évidements 7a d'une paroi 7 globalement cylindrique du connecteur 3 et à deux extrémités 6c dépassant radialement de la paroi 7, l'épingle 6 étant apte à occuper une position haute non verrouillée vis-à-vis de l'embout 4 et une position basse verrouillée contre la saillie 4b.

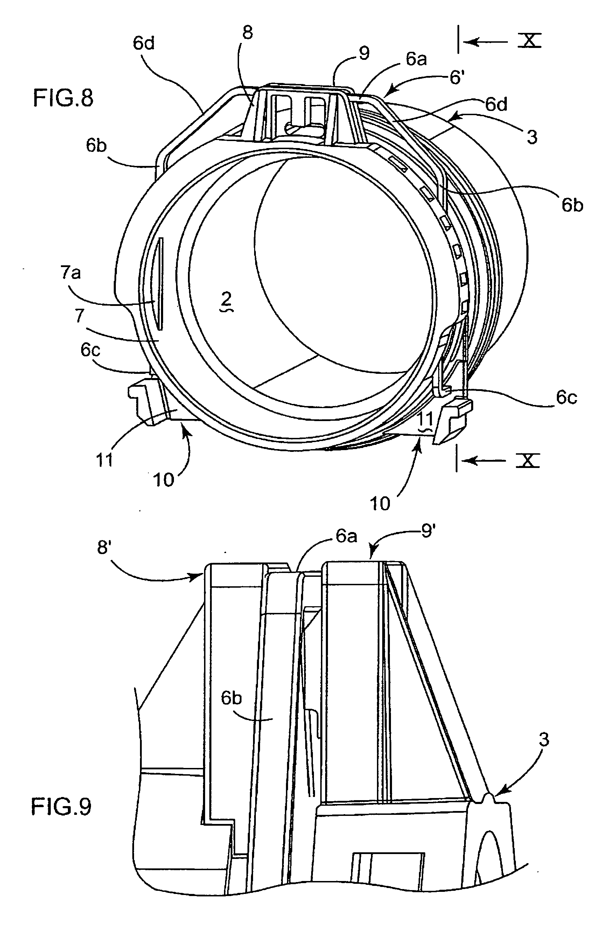

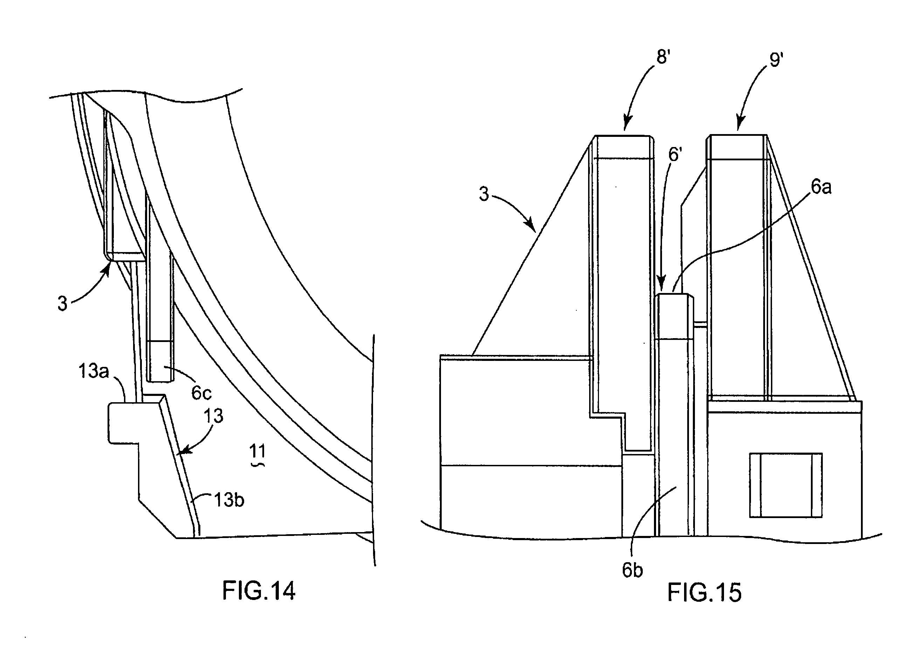

Comme visible aux figures 1 à 6, le connecteur femelle 3 présente, axialement de part et d'autre de sa paroi 7 évidée pour recevoir l'épingle 6, deux pattes supérieures 8 et 9 de maintien de l'épingle 6, parallèles et en forme de trapèzes isocèles dans cet exemple de réalisation - qui sont conçues pour caler axialement la tête 6a de celle-ci en position haute. L'une au moins de ces pattes 8 - la patte avant axialement externe dans l'exemple des figures 1 à 6 - peut être pourvue sur une zone inférieure de sa face interne en regard de l'autre patte 9 d'un évidement 8a que traverse axialement la tête d'épingle 6a en position basse verrouillée et, juste au-dessus de cet évidement de verrouillage 8a, d'une rampe oblique 8b qui est inclinée vers le bas et vers cette autre patte 9 et qui forme une butée s'opposant à la remontée de l'épingle 6 de sa position basse à sa position haute. Les figures 9 et 15 se rapportant à une variante de réalisation de l'épingle 6' illustrent également son maintien par les pattes 8' et 9' en position haute non verrouillée (figure 9) et basse verrouillée (figure 15).

Quant à l'épingle 6, 6', elle présente dans l'ensemble des exemples illustrés sensiblement une forme de U et une section sensiblement carrée, avec sa tête horizontale 6a qui est reliée à chacune de ses ailes 6b par une portion de liaison oblique divergente 6d (voir notamment figure 8), étant précisé que les deux extrémités inférieures 6c de l'épingle 6, 6' sont recourbées sensiblement à angle droit et vers l'arrière en fonctionnement (i.e. axialement vers l'intérieur du connecteur femelle 3) par rapport au plan médian de l'épingle 6, 6' contenant sa tête 6a et ses ailes 6b. La tête d'épingle 6a peut comporter (comme dans l'exemple des figures 1 à 6) un pavé rectangulaire de matière plastique 6e de préférence surmoulée qui entoure le fil métallique formant le reste de l'épingle 6 et qui peut coopérer lors du coulissement vertical de la tête 6a (i.e. entre sa position haute et sa position basse) avec les pattes de maintien 8 et 9 et notamment avec la rampe de butée 8b s'opposant à la remontée de la tête d'épingle 6a.

Comme visible à la figure 7, l'embout mâle 4 présente dans cet exemple une forme et des dimensions standards avec les diamètres externes D1 à D4 indiqués tout comme son diamètre interne D5, l'embout 4 étant de préférence du type de celui commercialisé par la société GENERAL MOTORS. On notera que l'embout 4 n'est ici représenté que partiellement, étant précisé que son premier tronçon cylindrique 4a se termine par une portion arrondie 4f reliée à son extrémité radiale correspondante et que son troisième tronçon tronconique 4e se prolonge (voir notamment figure 6) par un quatrième tronçon cylindrique 4g se terminant par un épaulement 4h et se prolongeant lui-même par un ou plusieurs autres tronçons cylindrique(s) ou tronconique(s).

A titre de matériaux utilisables pour les connecteurs mâle 2 et femelle 3, on peut utiliser des matières plastiques telles que des polyamides (e.g. PA 6.6) ou des polyesters (e.g. polybutylène téréphtalate), par exemple.

A titre de matériaux utilisables pour le joint d'étanchéité 5, 5', on peut utiliser des EPDM, des élastomères fluorocarbonés (FKM) ou même des copolymères éthylène-acrylate de méthyle (EAM), par exemple.

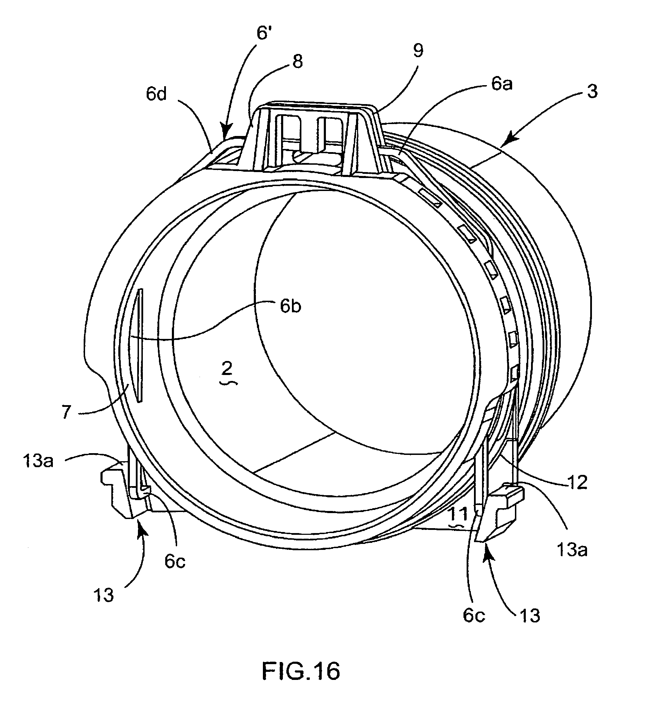

Selon l'invention, le connecteur femelle 3 comporte deux extensions inférieures 10 symétriques l'une de l'autre par rapport à son axe longitudinal de symétrie, qui sont conformées en relation avec les ailes 6b et les extrémités recourbées d'épingle 6c pour guider celle-ci entre ses positions haute et basse, uniquement après que l'embout mâle 4 a été convenablement inséré par rapport à l'épingle 6, 6' en position de pré-verrouillage de sorte que sa saillie 4b parvienne derrière les ailes d'épingle 4b (i.e. axialement au-delà de celles-ci), comme illustré aux figures 3 et 6. Comme visible aux figures 8 et 16, chaque extension 10 comporte des moyens de guidage de l'extrémité recourbée d'épingle 6c correspondante qui sont formés radialement à l'extérieur de la paroi 7 et avec lesquels ces extrémités 6c coopèrent pour n'autoriser le passage de l'épingle 6, 6' en position basse que si l'embout mâle 4 est inséré dans cette position de pré-verrouillage.

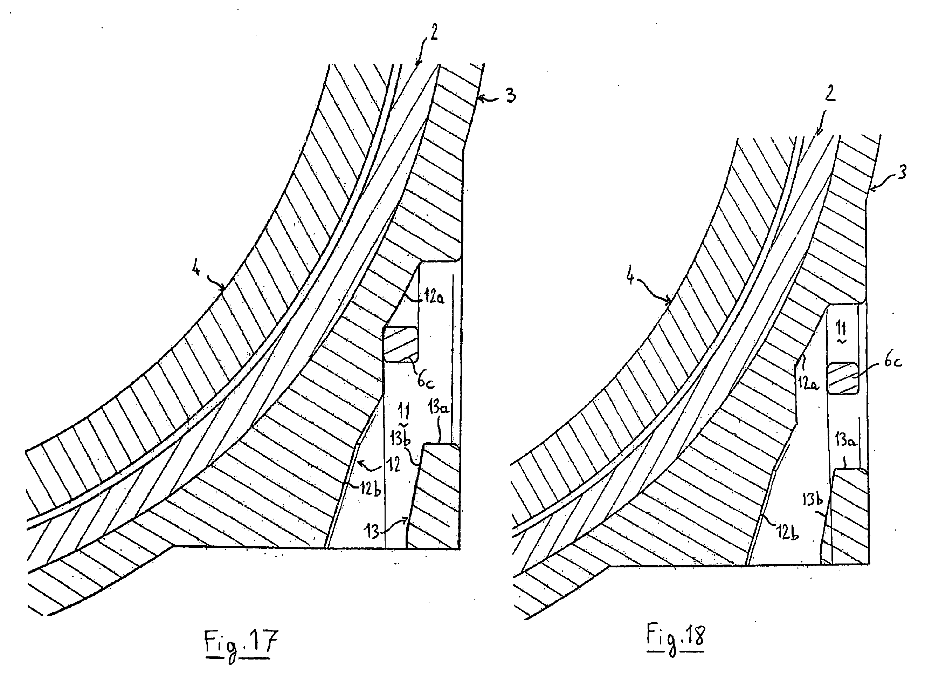

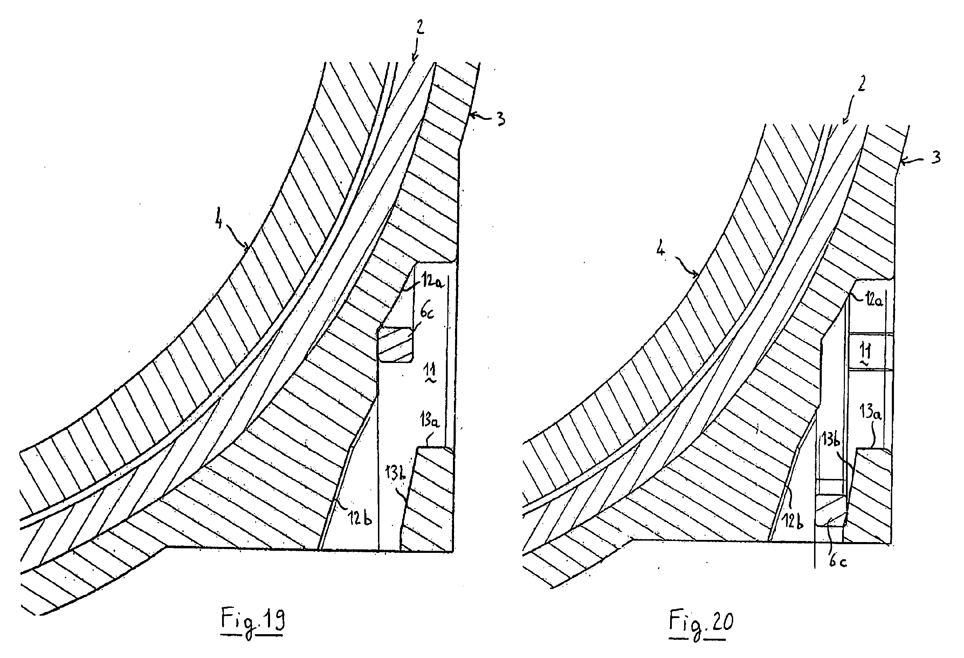

Ces moyens de guidage comprennent, en chacune de ces extensions 10 :
(i) une première rainure 11 qui est inclinée vers le bas et radialement vers l'intérieur et qui est apte à guider l'extrémité d'épingle 6c radialement vers l'intérieur (i.e. vers l'autre extrémité d'épingle 6c) de la position haute à la position basse, une fois l'embout 4 amené en position de pré-verrouillage par rapport à l'épingle 6, 6', de sorte à minimiser le jeu radial de montage entre l'épingle 6, 6' et l'embout 4 en position verrouillée, cette rainure 11 étant délimitée latéralement par :
   * une rampe radialement interne 12 qui est adjacente à la paroi 7 et contre laquelle se trouve l'extrémité d'épingle 6c avant insertion de l'embout 4 dans le connecteur 3 (voir figure 17) et en position de pré-verrouillage haute (voir figure 19), et par
   * une rampe radialement externe 13 définissant la partie la plus latéralement externe du connecteur 3 et contre laquelle se trouve l'extrémité d'épingle 6c en position de pré-verrouillage basse (voir figures 16 et 20) ; et
(ii) une seconde rainure 14 apte à caler axialement l'aile d'épingle 6b correspondante en position basse une fois l'embout 4 amené en position de pré-verrouillage par rapport à l'épingle 6, 6', de sorte à minimiser le jeu axial de montage entre l'embout 4 et le connecteur 3 en position verrouillée, cette rainure 14 étant formée sur une partie de la circonférence de la paroi 7 et étant définie par :
   * un bord arrière vertical 14a tourné vers l'extrémité recourbée correspondante 6c de l'épingle 6, 6', et par
   * un bord avant sensiblement vertical 14b à l'exception d'un décrochement oblique 14c conçu pour pousser l'aile d'épingle 6b contre ce bord arrière 14a en position verrouillée de sorte à réaliser ce calage axial.

Plus précisément, chaque première rainure 11 est telle que la rampe interne 12 est définie par une surface supérieure située au-dessus de la rampe externe 13 et comprenant un tronçon oblique 12a qui est incliné vers le haut et radialement vers l'extérieur et qui est conçu pour écarter radialement l'extrémité d'épingle 6c de l'autre extrémité 6c lors du démontage de l'épingle 6, 6', et par une surface inférieure oblique 12b située sensiblement en regard de la rampe externe 13 à laquelle elle est globalement parallèle. Cette rampe externe 13 est définie par un rebord supérieur 13a formant une butée anti-verrouillage s'opposant à l'obtention de la position verrouillée de l'épingle 6, 6' lorsque l'embout 4 n'est pas en position de pré-verrouillage par rapport à l'épingle 6, 6', et par une portion oblique 13b inclinée vers le bas d'un angle obtus par rapport à ce rebord 13a et recevant l'extrémité d'épingle 6c lorsque l'embout 4 est en position verrouillée.

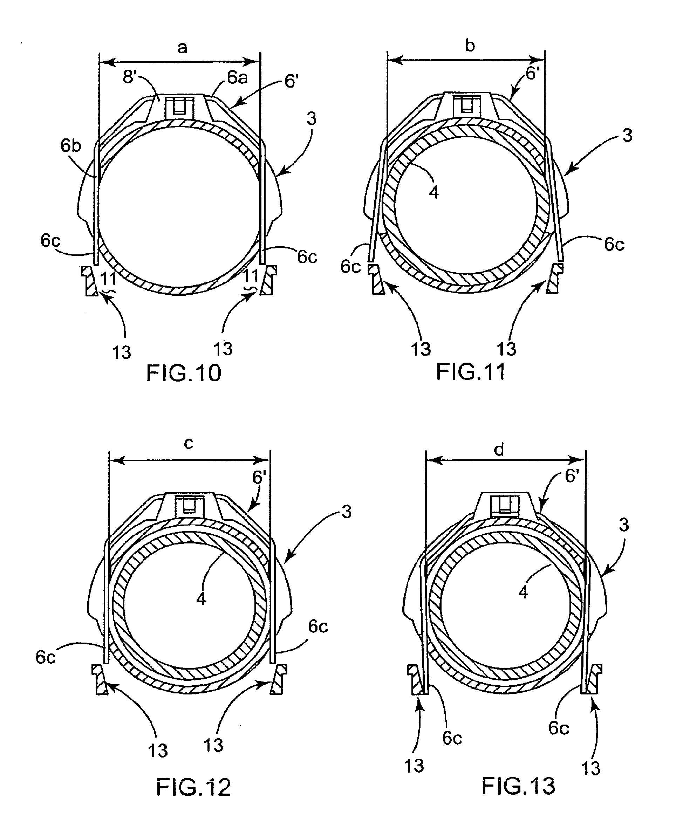

Les figures 10 à 13 illustrent les étapes principales du procédé de verrouillage de l'épingle 6' contre l'embout 4, avec l'épingle 6' en position haute en l'absence d'embout 4 à la figure 10 (voir également figure 17, où seul le premier tronçon 4a de l'embout 4 est inséré en regard de l'épingle 6' et où l'espacement a entre les extrémités d'épingle 6c au contact de la surface supérieure 12a de la rampe interne 12 est de 68,8 mm dans cet exemple de réalisation), puis l'écartement des ailes d'épingle 6b à la figure 11 (voir également les figures 14 et 18, où l'espacement b entre les extrémités d'épingle 6c ainsi écartées est de 72,6 mm) du fait du passage de la saillie 4b au contact des ailes 6b, suivi de l'insertion de l'embout 4 en position de pré-verrouillage de la figure 12 (voir également figure 19, où l'espacement c entre les extrémités d'épingle 6c au contact de la surface inférieure oblique 12b de la rampe interne 12 est à nouveau de 68,8 mm) et enfin du coulissement vers le bas de l'épingle 6' via une pression exercée sur sa tête 6a l'amenant dans la position basse verrouillée de la figure 13 (voir également figure 20, où l'espacement d entre les extrémités d'épingle 6c au contact de la portion oblique 13b de la rampe externe 13 est de 68,2 mm).

Cet espacement après verrouillage des extrémités 6c de l'épingle 6' qui est visible à la figure 20 témoigne du fait que les ailes d'épingle 6b sont contraintes radialement vers l'intérieur contre l'embout 4 d'un diamètre global de 68,8 - 68,2 = 0,6 mm, soit une compression radiale de 0,3 mm que chaque aile d'épingle 6b exerce sur le côté correspondant de l'embout 4.

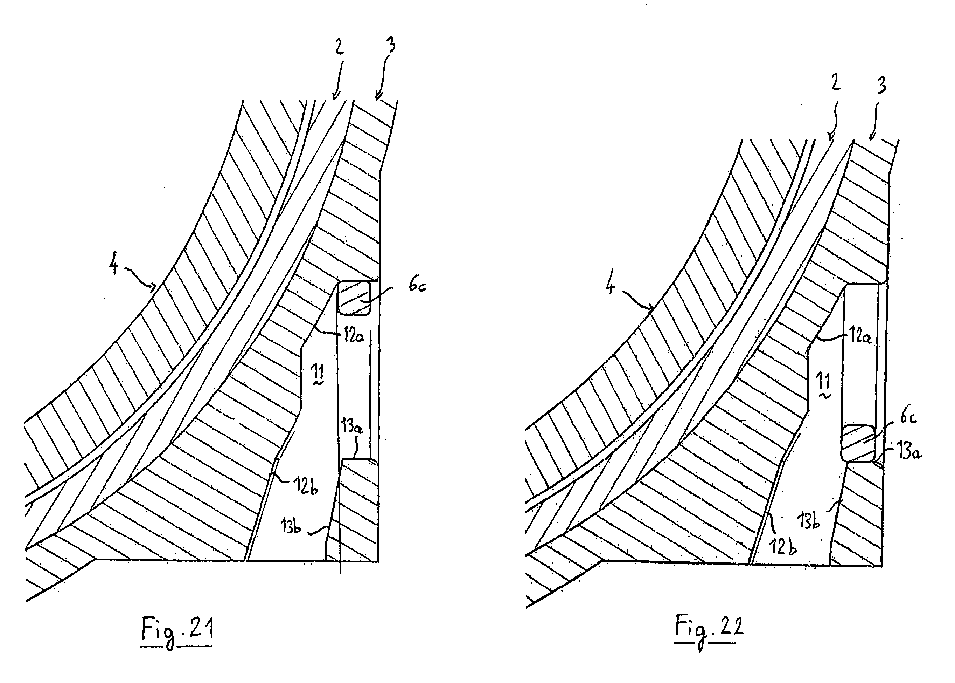

Le démontage de l'épingle 6' après son verrouillage est illustré à la figure 21, avec le guidage de chaque extrémité d'épingle 6c avec écartement radial de cette extrémité 6c au contact puis au-delà du tronçon supérieur oblique 12a de la rampe interne 12, ce qui montre une extension radiale globale de 73,2 mm - 72,6 mm = 0,6 mm pour les ailes d'épingle 6b, soit un jeu radial de 0,3 mm pour chaque aile d'épingle 6b vis-à-vis du côté correspondant de l'embout 4.

Quant à la figure 22 qui illustre le cas où la saillie 4b de l'embout 4 se trouve toujours devant l'épingle 6' (i.e. axialement en deçà de l'épingle 6'), elle illustre l'impossibilité mécanique d'abaisser l'épingle 6' en position basse verrouillée du fait que chacune de ses extrémités 6c vient alors buter contre le rebord supérieur 13a de la rampe externe 13, empêchant ainsi le verrouillage et générant un défaut de raccordement visible pour l'opérateur du fait que l'épingle 6' demeure en position haute.

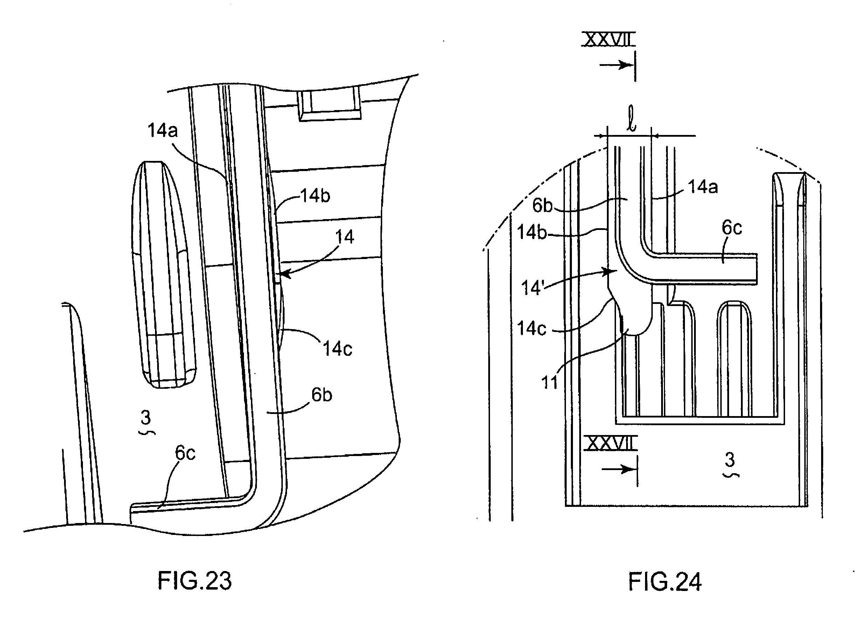

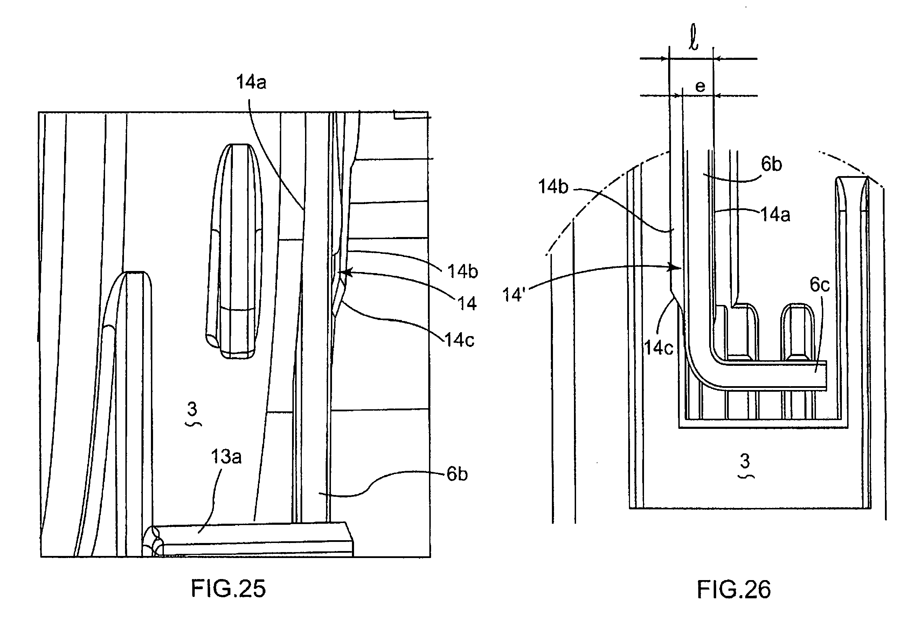

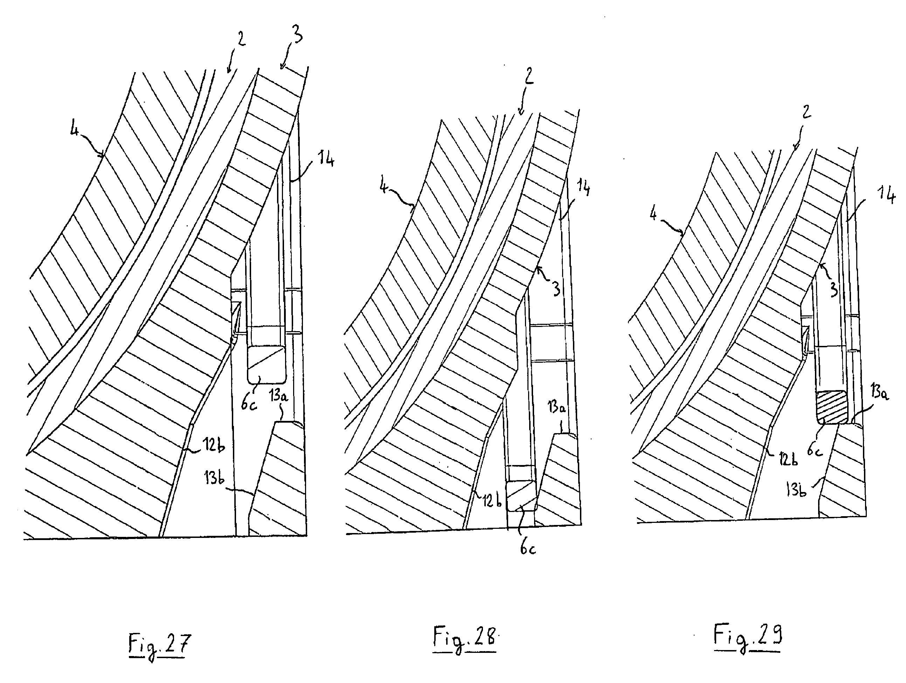

Les figures 23 et 25 illustrent un exemple de réalisation de chaque seconde rainure 14, en relation avec l'aile d'épingle 6b qui y est montée en position haute (figure 23) puis basse (figure 25), et les figures 24 et 26 une variante de réalisation de cette seconde rainure 14' avec l'aile d'épingle 6b en position haute (figure 24) puis basse (figure 26). Comme notamment visible à la figure 29, on comprend qu'il est impossible lorsque l'embout 4 occupe une position axiale autre que la position de pré-verrouillage, d'amener l'épingle 6' en position basse verrouillée du fait qu'elle vient buter contre le rebord supérieur 13a de la rampe externe 13. Et comme illustré aux figures 24 et 25 (la figure 24 avec l'épingle 6' en position haute étant à associer à la figure 27, et la figure 25 en position basse à la figure 28), on comprend que le décrochement oblique 14c du bord avant 14b de chaque seconde rainure 14, 14' vient caler axialement chaque aile d'épingle 6b par rapport au connecteur 3 avec une minimisation du jeu axial correspondant à ce rétrécissement 14c, jeu axial qui est seulement de 0,2 mm en position basse verrouillée en dessous de ce rétrécissement 14c aux figures 25 et 26 alors que ce jeu était de 0,7 mm aux figures 23 et 24 (du fait que la largeur axiale I de chaque seconde rainure 14, 14' au-dessus de ce rétrécissement 14c est de 2,7 mm et la largeur e de l'épingle 6' est de 2 mm dans ces exemples de réalisation).

Chaque seconde rainure 14, 14' qui est notamment visible à la figure 24 débouche en sa partie inférieure sur la première rainure 11, comme illustré dans les vues en coupe transversale des figures 27 à 29, avec l'extrémité d'épingle 6c qui est montrée en position haute à la figure 27 lorsque l'embout 4 n'occupe pas la position de pré-verrouillage précitée, en position basse verrouillée à la figure 28 uniquement lorsque l'embout 4 occupe cette position de pré-verrouillage, et en position de butée anti-verrouillage à la figure 29 lorsque l'on exerce une pression descendante sur l'épingle 6' hors de cette position de pré-verrouillage pour l'embout 4.

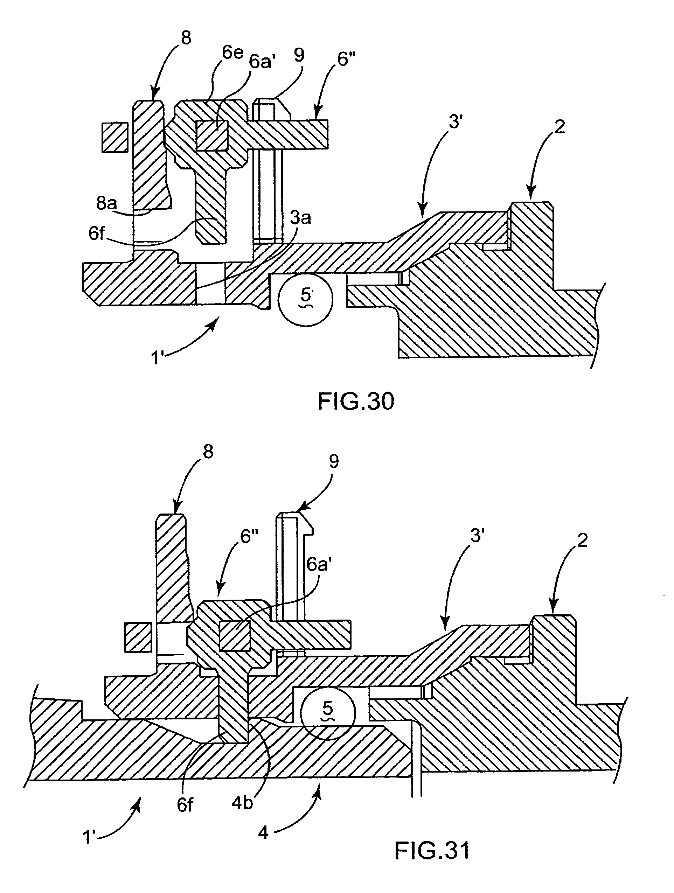

Le dispositif de raccordement 1' selon la variante des figures 30 et 31 se différencie uniquement de celui des figures 2 et 3, en ce que son épingle de verrouillage 6" présente une tête d'épingle 6a' munie sur sa face inférieure - d'une manière rapportée ou d'un seul tenant, par exemple par surmoulage - d'un pion auxiliaire de verrouillage 6f d'axe de symétrie vertical qui est situé à égale distance des ailes d'épingle 6b (inchangées), et qui est conçu dans la position verrouillée de l'épingle 6" (voir figure 31) pour traverser radialement un orifice 3a également vertical du connecteur femelle 3' en venant buter devant et contre la saillie 4b de l'embout 4 (également inchangé), formant ainsi en plus des deux ailes d'épingle 6b un point de verrouillage complémentaire de l'embout 4 dans la direction axiale.

## Revendications

1. Dispositif de raccordement (1, 1') pour transfert de fluide comprenant :
- un connecteur tubulaire femelle (3, 3') qui est destiné à recevoir un connecteur tubulaire mâle (2) et qui est destiné à être raccordé de manière verrouillable à un embout tubulaire mâle (4) présentant une saillie périphérique (4b) avec interposition d'au moins un joint d'étanchéité annulaire (5, 5') radialement entre l'embout mâle et le connecteur femelle, et
- une épingle (6, 6', 6") de verrouillage de l'embout qui est montée sur le connecteur femelle et qui présente sensiblement une forme de U à une tête (6a, 6a') se prolongeant par deux ailes (6b) montées traversantes dans une paroi (7) globalement cylindrique du connecteur femelle et à deux extrémités (6c) dépassant radialement de ladite paroi, l'épingle étant apte à occuper des positions sortie et rentrée respectivement non verrouillée et verrouillée contre ladite saillie, l'embout mâle présentant un premier tronçon (4a) de diamètre D1 servant de portée pour ledit au moins joint et un tronçon de serrage (4d) recevant l'épingle en position verrouillée et de diamètre D3 inférieur à D1,
**caractérisé en ce que** le connecteur femelle comprend des moyens de guidage (11, 12, 13, 14) des extrémités d'épingle qui sont formés radialement à l'extérieur de ladite paroi et avec lesquels ces extrémités coopèrent pour n'autoriser le passage de l'épingle en position verrouillée que si l'embout mâle est inséré dans le connecteur femelle dans une position de pré-verrouillage où sa saillie est située derrière les ailes d'épingle, le connecteur femelle comportant une butée anti-verrouillage (13a) s'opposant à l'obtention de la position verrouillée de l'épingle lorsque l'embout mâle n'est pas en position de pré-verrouillage par rapport à l'épingle.

2. Dispositif de raccordement (1, 1') selon la revendication 1, **caractérisé en ce que** lesdits moyens de guidage (11, 12, 13, 14) comprennent une paire de premières rainures (11) formées dans le connecteur femelle (3, 3') et respectivement aptes à guider les deux extrémités d'épingle (6c) de la position non verrouillée à la position verrouillée en les rapprochant radialement l'une de l'autre, une fois l'embout (4) amené en position de pré-verrouillage par rapport à l'épingle (6, 6', 6"), de sorte que ces premières rainures permettent de minimiser le jeu radial de montage entre l'épingle et l'embout en position verrouillée, et de préférence **en ce que** lesdites premières rainures (11) sont symétriques l'une de l'autre par rapport à un plan axial médian du connecteur femelle (3, 3') et convergent obliquement l'une vers l'autre et vers le bas de ce connecteur femelle qui est opposé à la tête d'épingle (6a, 6a').

3. Dispositif de raccordement (1, 1') selon la revendication 2, **caractérisé en ce que** chaque première rainure (11) est délimitée latéralement par une rampe radialement interne (12) qui est adjacente à ladite paroi (7) et contre laquelle se trouve l'extrémité d'épingle (6c) correspondante avant insertion de l'embout mâle (4) dans le connecteur femelle (3, 3') et en position de pré-verrouillage non verrouillée de l'épingle (6, 6', 6"), et par une rampe radialement externe (13) qui est distale par rapport à ladite paroi et contre laquelle se trouve cette extrémité d'épingle en position de pré-verrouillage verrouillée.

4. Dispositif de raccordement (1, 1') selon la revendication 3, **caractérisé en ce que** ladite rampe externe (13) est définie par :
- un rebord supérieur (13a) formant ladite butée anti-verrouillage, et par
- une portion oblique (13b) inclinée d'un angle obtus par rapport à ce rebord et recevant l'extrémité correspondante d'épingle (6c) lorsque l'embout mâle (4) est en position verrouillée.

5. Dispositif de raccordement (1, 1') selon la revendication 4, **caractérisé en ce que** ladite rampe interne (12) est définie par :
- une surface supérieure située au-dessus dudit rebord (13a) et comprenant un tronçon oblique (12a), les tronçons obliques respectifs des deux rampes internes divergeant vers le haut l'un par rapport à l'autre et étant conçus pour écarter radialement les deux extrémités d'épingle (6c) l'une de l'autre lors du démontage de l'épingle (6, 6', 6"), et par
- une surface inférieure oblique (12b) située sensiblement en regard de ladite portion oblique (13b), à laquelle elle est globalement parallèle.

6. Dispositif de raccordement (1, 1') selon une des revendications précédentes, **caractérisé en ce que** lesdits moyens de guidage (11, 12, 13, 14) comprennent une paire de secondes rainures (14) formées dans le connecteur femelle (3, 3') et respectivement aptes à caler axialement les deux ailes d'épingle (6b) en position verrouillée une fois l'embout (4) amené en position de pré-verrouillage par rapport à l'épingle (6, 6', 6"), de sorte que ces secondes rainures permettent de minimiser le jeu axial de montage entre l'embout et le connecteur femelle en position verrouillée.

7. Dispositif de raccordement (1, 1') selon la revendication 6, **caractérisé en ce que** chaque seconde rainure (14) est formée sur une partie de la circonférence de ladite paroi (7), débouche sur ladite première rainure (11) et est en outre adaptée pour caler axialement, en position verrouillée, une partie de l'extrémité d'épingle (6c) correspondante.

8. Dispositif de raccordement (1, 1') selon une des revendications précédentes, **caractérisé en ce que** les extrémités (6c) de l'épingle (6, 6', 6") sont toutes deux recourbées d'un même côté axial d'un plan transversal médian contenant sa tête (6a, 6a') et le reste de ses ailes (6b), pour leur guidage par lesdits moyens de guidage (11, 12, 13,14).

9. Dispositif de raccordement (1, 1') selon les revendications 7 et 8, **caractérisé en ce que** ladite seconde rainure (14) est définie par un bord arrière (14a) sensiblement vertical tourné vers l'extrémité recourbée (6c) correspondante de l'épingle (6, 6', 6"), et par un bord avant (14b) sensiblement vertical à l'exception d'un décrochement oblique (14c) ayant pour effet de pousser l'aile correspondante d'épingle (6b) contre ce bord arrière en position verrouillée de sorte à réaliser ce calage axial.

10. Dispositif de raccordement (1, 1') selon une des revendications précédentes, **caractérisé en ce que** l'épingle (6, 6', 6") présente une section transversale sensiblement polygonale, de préférence globalement carrée.

11. Dispositif de raccordement (1, 1') selon une des revendications précédentes, **caractérisé en ce qu'**il comprend en outre l'embout mâle (4), lequel est inséré radialement à l'intérieur du connecteur femelle (3, 3') et comprend, à partir de son extrémité axialement interne destinée à se trouver la plus à l'intérieur du connecteur femelle en position de pré-verrouillage :
- ledit premier tronçon (4a) globalement cylindrique de diamètre D1,
- ladite saillie (4b) de forme globalement tronconique qui diverge à partir de ce premier tronçon pour atteindre un diamètre de saillie D2 supérieur à D1 puis qui se termine par une portion annulaire radiale (4c),
- ledit tronçon de serrage (4d) de diamètre D3 inférieur à D1 formant un second tronçon cylindrique qui prolonge à angle droit cette portion radiale, et
- un troisième tronçon tronconique (4e) qui diverge à partir de ce second tronçon pour atteindre un diamètre D4 supérieur à D2.

12. Dispositif de raccordement (1') selon une des revendications précédentes, **caractérisé en ce que** la tête d'épingle (6a') est munie sur sa face interne d'un organe auxiliaire de verrouillage (6f), par exemple en forme de pion, qui est conçu dans la position verrouillée de l'épingle (6") pour traverser radialement un orifice (3a) correspondant du connecteur femelle (3') en venant buter contre la saillie (4b) de l'embout (4), formant ainsi un troisième point de verrouillage de l'embout en plus des deux ailes d'épingle (6b).

13. Procédé de verrouillage d'un dispositif de raccordement (1, 1') selon une des revendications précédentes, **caractérisé en ce qu'**il comprend :
a) une insertion progressive de l'embout mâle (4) à l'intérieur du connecteur femelle (3, 3') pourvu de l'épingle (6, 6', 6") en position sortie avec ses ailes (6b) qui traversent ladite paroi (7), jusqu'à ce que ladite saillie (4b) de l'embout vienne écarter radialement les ailes d'épingle l'une de l'autre puis soit amenée derrière ces ailes, de sorte que ces dernières soient positionnées contre cette saillie dans ladite position de pré-verrouillage, puis
b) uniquement dans cette position de pré-verrouillage, une poussée appliquée à la tête d'épingle (6a, 6a') radialement vers l'intérieur qui amène l'épingle de ladite position non verrouillée à ladite position verrouillée via un guidage des extrémités d'épingle par lesdits moyens de guidage (11, 12, 13, 14).
et caractérisé de préférence **en ce qu'**il comprend à l'étape b) un guidage des deux extrémités d'épingle (6c) dans une paire de premières rainures (11) du connecteur femelle (3, 3') de manière que ces extrémités se rapprochent radialement de l'embout (4) lors de leur passage à ladite position verrouillée, pour minimiser le jeu radial de montage entre l'épingle (6, 6', 6") et l'embout en position verrouillée.

14. Procédé selon la revendication 13, **caractérisé en ce qu'**il comprend à l'étape b) un guidage en butée axiale des deux ailes d'épingle (6b) dans une paire de secondes rainures (14) du connecteur femelle (3, 3'), de sorte à minimiser le jeu axial de montage entre l'embout (4) et le connecteur femelle en position verrouillée.

15. Procédé selon la revendication 13 ou 14, **caractérisé en ce qu'**il comprend en outre un troisième point de verrouillage de l'épingle (6") contre ladite saillie d'embout (4b) qui complète ceux réalisés par les ailes d'épingle (6b) et qui est obtenu en faisant coulisser en position rentrée, avec la tête d'épingle (6a'), un organe auxiliaire de verrouillage (6f) équipant cette tête dans un orifice (3a) du connecteur femelle (3'), cet organe de verrouillage étant par exemple en forme de pion.

## Claims

1. Connecting device (1, 1') for transferring fluid comprising:
- a female tubular connector (3, 3') which is designed to receive a male tubular connector (2) and which is designed to be connected in a lockable manner to a male tubular fitting (4) having a peripheral projection (4b) with at least one annular seal (5, 5') positioned radially between the male fitting and female connector, and
- a pin (6, 6', 6") for locking the fitting, which is mounted on the female connector and which is essentially of a U shape with a head (6a, 6a') extended by two wings (6b) mounted so that they extend through an essentially cylindrical wall (7) of the female connector and with two ends (6c) extending radially beyond said wall, the pin being designed to assume extracted and inserted positions not locked and locked respectively against said projection, the male fitting having a first section (4a) with a diameter D1 serving as a seat for said at least one seal and a clamping section (4d) receiving the pin in the locked position and having a diameter D3 smaller than D1,
**characterised in that** the female connector has guide means (11, 12, 13, 14) for guiding ends of the pin formed radially outside of said wall and with which these ends co-operate to prevent the pin from passing into the locked position unless the male fitting has been inserted in the female connector in a pre-locking position in which its projection is disposed behind the pin wings, the female connector having an anti-lock stop (13a) opposing the pin to prevent it from reaching the locked position if the male fitting is not in the pre-locking position relative to the pin.

2. Connecting device (1, 1') as claimed in claim 1, **characterised in that** said guide means (11, 12, 13, 14) comprise a pair of first grooves (11) formed in the female connector (3, 3') and respectively designed to guide the two pin ends (6c) from the non-locked position to the locked position by moving them radially towards one another once the fitting (4) has reached the pre-locking position relative to the pin (6, 6', 6"), so that these first grooves enable the radial fitting clearance between the pin and fitting to be minimised in the locked position and preferably **in that** said first grooves (11) are symmetrical with one another relative to a median axial plane of the female connector (3, 3') and converge obliquely towards one another and towards the bottom of this female connector which is opposite the pin head (6a, 6a').

3. Connecting device (1, 1') as claimed in claim 2, **characterised in that** each first groove (11) is laterally bounded by a radially inner ramp (12) which is adjacent to said wall (7) and against which the corresponding pin end (6c) is disposed before the male fitting (4) is inserted in the female connector (3, 3') and when the pin (6, 6', 6") is in the non-locked pre-locking position, and by a radially outer ramp (13) which is distal relative to said wall and against which this pin end is disposed in the locked pre-locking position.

4. Connecting device (1, 1') as claimed in claim 3, **characterised in that** said outer ramp (13) is defined by:
- a top flange (13a) constituting said anti-lock stop and by
- an oblique portion (13b) inclined at an obtuse angle relative to this flange and receiving the corresponding pin end (6c) when the male fitting (4) is in the locked position.

5. Connecting device (1, 1') as claimed in claim 4, **characterised in that** said inner ramp (12) is defined by:
- a top surface disposed above said flange (13a) and comprising an oblique section (12a), the respective oblique sections of the two inner ramps diverging upwards relative to one another and being designed to move the two pin ends (6c) radially apart from one another when dismantling the pin (6, 6', 6"), and by
- a bottom oblique surface (12b) disposed substantially facing said oblique portion (13b), with respect to which it is essentially parallel.

6. Connecting device (1, 1') as claimed in one of the preceding claims, **characterised in that** said guide means (11, 12, 13, 14) comprise a pair of second grooves (14) formed in the female connector (3, 3') and respectively designed to block the two pin wings (6b) axially in the locked position once the male fitting (4) is in the pre-locking position relative to the pin (6, 6', 6") so that these second grooves enable the axial fitting clearance between the fitting and female connector to be minimised in the locked position.

7. Connecting device (1, 1') as claimed in claim 6, **characterised in that** each second groove (14) is formed on a part of the circumference of said wall (7), opens onto said first groove (11) and is also adapted to block a part of the corresponding pin end (6c) axially in the locked position.

8. Connecting device (1, 1') as claimed in one of the preceding claims, **characterised in that** the ends (6c) of the pin (6, 6', 6") are both curved on a same axial side of a median transverse plane containing its head (6a, 6a') and the rest of its wings (6b), so that they are guided by said guide means (11, 12, 13, 14).

9. Connecting device (1, 1') as claimed in claims 7 and 8, **characterised in that** said second groove (14) is defined by a substantially vertical rear edge (14a) directed towards the corresponding curved end (6c) of the pin (6, 6', 6") and by a front edge (14b) that is substantially vertical with the exception of an oblique offset (14c), the effect of which is to push the corresponding pin wing (6b) against this rear edge in the locked position in order to effect this axial blocking action.

10. Connecting device (1, 1') as claimed in one of the preceding claims, **characterised in that** the pin (6, 6', 6") has a substantially polygonal, preferably essentially square, cross-section.

11. Connecting device (1, 1') as claimed in one of the preceding claims, **characterised in that** it further comprises the male fitting (4), which is inserted radially inside the female connector (3, 3') and comprises, from its axially inner end designed to be disposed the farthest inside the female connector in the pre-locking position:
- said first essentially cylindrical section (4a) with a diameter D1,
- said projection (4b) of an essentially frustoconical shape which diverges from this first section to a projection diameter D2 greater than D1, then terminates in a radial annular portion (4c),
- said clamping section (4d) of a diameter D3 smaller than D1 forming a second cylindrical section which extends this radial portion at a right angle, and
- a third frustoconical section (4e) which diverges from this second section to a diameter D4 greater than D2.

12. Connecting device (1') as claimed in one of the preceding claims, **characterised in that** the pin head (6a') is provided with an auxiliary locking element (6f) disposed on its internal face, for example in the form of a locking pin, which, when the pin (6") is in the locked position, is designed to extend radially through a corresponding orifice (3a) of the female connector (3') so that it moves into abutment against the projection (4b) of the fitting (4), thereby constituting a third locking point of the fitting in addition to the two pin wings (6b).

13. Method of locking a connecting device (1, 1') as claimed in one of the preceding claims, **characterised in that** it comprises:
a) progressively inserting the male fitting (4) inside the female connector (3, 3') incorporating the pin (6, 6', 6") into an extracted position by its wings (6b) which extend through said wall (7), until said projection (4b) of the fitting moves the pin wings radially apart from one another and is then moved behind these wings so that the latter are positioned against this projection in said pre-locking position, after which
b) solely in this pre-locking position, a pushing force is applied to the pin head (6a, 6a') radially towards the interior, which moves the pin from said non-locked position to said locked position via a guiding action of the pin ends by said guide means (11, 12, 13, 14),
and preferably **characterised in that** in step b), it comprises guiding the two pin ends (6c) in a pair of first grooves (11) of the female connector (3, 3') so that these ends move radially towards the fitting (4) as they move into said locked position in order to minimise the radial fitting clearance between the pin (6, 6', 6") and fitting in the locked position.

14. Method as claimed in claim 13, **characterised in that** in step b), it comprises guiding the two pin wings (6b) into axial abutment in a pair of second grooves (14) of the female connector (3, 3') in order to minimise the axial fitting clearance between the fitting (4) and female connector in the locked position.

15. Method as claimed in claim 13 or 14, **characterised in that** it further comprises a third locking point of the pin (6") against said fitting projection (4b) which completes those produced by the pin wings (6b) and which is obtained by sliding, by means of the pin head (6a'), an auxiliary locking element (6f) provided on this head into an orifice (3a) of the female connector (3') in an inserted position, this locking element being provided in the form of a locking pin, for example.

## Patentansprüche

1. Anschlussvorrichtung (1, 1') zum Fluidtransfer, umfassend:
- einen weiblichen röhrenförmigen Verbinder (3, 3'), welcher dazu bestimmt ist, einen männlichen röhrenförmigen Verbinder (2) aufzunehmen und welcher dazu bestimmt ist, auf verriegelbare Weise an einem männlichen röhrenförmigen Ansatzstück (4) angeschlossen zu werden, welches einen Umfangsvorsprung (4b) aufweist, mit Einfügung wenigstens einer ringförmigen Dichtung (5, 5') radial zwischen dem männlichen Ansatzstück und dem weiblichen Verbinder, und
- eine Spange (6, 6', 6") zur Verriegelung des Ansatzstücks, welche an dem weiblichen Verbinder angebracht ist und im Wesentlichen eine Form eines U aufweist, mit einem Kopf (6a, 6a'), welcher sich über zwei Flügel (6b) verlängert, welche eine insgesamt zylindrische Wand (7) des weiblichen Verbinders durchdringend angebracht sind, und mit zwei Enden (6c), welche radial aus der Wand herausragen, wobei die Spange dazu ausgestaltet ist, Ausgangs- und Eingangspositionen einzunehmen, welche gegen den Vorsprung nicht verriegelt bzw. verriegelt sind, wobei das männliche Ansatzstück einen ersten Abschnitt (4a) mit einem Durchmesser D1, welcher als Auflage für die wenigstens eine Dichtung dient, und einen Verriegelungsabschnitt (4d), welcher die Spange in der verriegelten Position aufnimmt, mit einem Durchmesser D3 kleiner als D1 aufweist,
**dadurch gekennzeichnet, dass** der weibliche Verbinder Führungsmittel (11, 12, 13, 14) für die Spangenenden umfasst, welche radial an der Außenseite der Wand ausgebildet sind und mit welchen diese Enden zusammenwirken, um den Durchgang der Spange in der verriegelten Position nicht zuzulassen, außer wenn das männliche Ansatzstück in den weiblichen Verbinder in einer Vorverriegelungsposition eingesetzt ist, wo sein Vorsprung sich hinter den Spangenflügeln befindet, wobei der weibliche Verbinder einen Verriegelungsentgegenwirkungsanschlag (13a) umfasst, welcher dem Einnehmen der verriegelten Position der Spange entgegenwirkt, wenn das männliche Ansatzstück nicht in einer Vorverriegelungsposition bezüglich der Spange ist.

2. Anschlussvorrichtung (1, 1') nach Anspruch 1, **dadurch gekennzeichnet, dass** die Führungsmittel (11, 12, 13, 14) ein Paar von ersten Rillen (11) umfassen, welche in dem weiblichen Verbinder (3, 3') ausgebildet sind und jeweils dazu ausgestaltet sind, die zwei Spangenenden (6c) aus der nicht verriegelten Position in die verriegelte Position zu führen, wobei sie diese radial aneinander annähern, sobald das Ansatzstück (4) in die Vorverriegelungsposition bezüglich der Spange (6, 6', 6") gebracht ist, so dass diese ersten Rillen es ermöglichen, dass radiale Montagespiel zwischen der Spange und dem Ansatzstück in der verriegelten Position zu minimieren, und dass vorzugsweise die ersten Rillen (11) zueinander bezüglich einer axialen Mittelebene des weiblichen Verbinders (3, 3') symmetrisch und schräg aufeinander und in Richtung des Unterteils des weiblichen Verbinders, welches dem Spangenkopf (6a, 6a') gegenüberliegt, zulaufen.

3. Anschlussvorrichtung (1, 1') nach Anspruch 2, **dadurch gekennzeichnet, dass** jede erste Rille (11) seitlich begrenzt ist durch eine radial innere Rampe (12), welche benachbart zu der Wand (7) ist und an welcher sich das entsprechende Spangenende (6c) vor Einsetzen des männlichen Ansatzstücks (4) in den weiblichen Verbinder (3, 3') und in der nicht verriegelten Vorverriegelungsposition der Spange (6, 6', 6") befindet, und durch eine radial äußere Rampe (13), welche distal bezüglich der Wand ist und an welcher sich dieses Spangenende in der verriegelten Vorverriegelungsposition befindet.

4. Anschlussvorrichtung (1, 1') nach Anspruch 3, **dadurch gekennzeichnet, dass** die äußere Rampe (13) definiert ist durch:
- einen oberen Rand (13a), welcher den Verriegelungsentgegewirkungsanschlag bildet, und durch
- einen schrägen Abschnitt (13b), welcher um einen stumpfen Winkel bezüglich dieses Randes geneigt ist und das entsprechende Ende der Spange (6c) aufnimmt, wenn das männliche Ansatzstück (4) in der verriegelten Position ist.

5. Anschlussvorrichtung (1, 1') nach Anspruch 4, **dadurch gekennzeichnet, dass** die innere Rampe (12) definiert ist durch:
- eine obere Fläche, welche sich über dem Rand (13a) befindet und einen schrägen Abschnitt (12a) umfasst, wobei die jeweiligen schrägen Abschnitte der zwei inneren Rampen aufeinander bezogen nach oben auseinander laufen und dazu ausgestaltet sind, bei der Demontage der Spange (6, 6', 6") die zwei Spangenenden (6c) voneinander zu entfernen, und durch
- eine untere schräge Fläche (12b), welche sich im Wesentlichen gegenüber dem schrägen Abschnitt (13b) befindet, zu welchem sie insgesamt parallel ist.

6. Anschlussvorrichtung (1, 1') nach einem der vorhergehenden Ansprüche, **dadurch gekennzeichnet, dass** die Führungsmittel (11, 12, 13, 14) ein Paar von zweiten Rillen (14) umfassen, welche in dem weiblichen Verbinder (3, 3') ausgebildet sind und jeweils dazu ausgestaltet sind, die zwei Spangenflügel (6b) in der verriegelten Position axial zu blockieren, sobald das Ansatzstück (4) in die Vorverriegelungsposition bezüglich der Spange (6, 6', 6") gebracht ist, so dass diese zweiten Rillen es ermöglichen, das axiale Montagespiel zwischen dem Ansatzstück und dem weiblichen Verbinder in der verriegelten Position zu minimieren.

7. Anschlussvorrichtung (1, 1') nach Anspruch 6, **dadurch gekennzeichnet, dass** jede zweite Rille (14) auf einem Abschnitt des Umfangs der Wand (7) ausgebildet ist, zu der ersten Rille (11) führt und außerdem dazu ausgestaltet ist, in der verriegelten Position einen Abschnitt des entsprechenden Spangenendes (6c) zu blockieren.

8. Anschlussvorrichtung (1, 1') nach einem der vorhergehenden Ansprüche, **dadurch gekennzeichnet, dass** die Enden (6c) der Spange (6, 6', 6'') für ihre Führung durch die Führungsmittel (11, 12, 13, 14) beide auf eine selbe axiale Seite einer transversalen Mittelebene gekrümmt sind, welche ihren Kopf (6a, 6a') und den Rest ihrer Flügel (6b) enthält.

9. Anschlussvorrichtung (1, 1') nach den Ansprüchen 7 und 8, **dadurch gekennzeichnet, dass** die zweite Rille (14) definiert ist durch einen hinteren Rand (14a), welcher im Wesentlichen vertikal in Richtung des entsprechenden gekrümmten Endes (6c) der Spange (6, 6', 6'') gewandt ist, und durch einen vorderen Rand (14b), welcher im Wesentlichen vertikal ist, mit Ausnahme einer schrägen Abweichung (14c), was zum Ergebnis hat, dass in der verriegelten Position der entsprechende Spangenflügel (6d) gegen diesen hinteren Rand gedrückt wird, so dass diese axiale Blockierung realisiert wird.

10. Anschlussvorrichtung (1, 1') nach einem der vorhergehenden Ansprüche, **dadurch gekennzeichnet, dass** die Spange (6, 6', 6'') einen im Wesentlichen polygonalen, vorzugsweise insgesamt viereckigen Querschnitt aufweist.

11. Anschlussvorrichtung (1, 1') nach einem der vorhergehenden Ansprüche, **dadurch gekennzeichnet, dass** sie außerdem das männliche Ansatzstück (4) umfasst, welches radial in das Innere des weiblichen Verbinders (3, 3') eingesetzt ist und, ausgehend von seinem axial inneren Ende, welches dazu bestimmt ist, sich in der Vorverriegelungsposition am Weitesten im Inneren des weiblichen Verbinders zu befinden, umfasst:
- den ersten insgesamt zylindrischen Abschnitt (4a) mit Durchmesser D1,
- den Vorsprung (4b) mit insgesamt kegelstumpfartiger Form, welcher ausgehend von diesem ersten Abschnitt auseinanderläuft, um einen Vorsprungsdurchmesser D2 größer als D1 zu erreichen, bis er in einem radialen ringförmigen Abschnitt (4c) endet,
- den Verriegelungsabschnitt (4d) mit Durchmesser D3 kleiner als D1, welcher einen zweiten zylindrischen Abschnitt bildet, welcher im rechten Winkel diesen radialen Abschnitt verlängert, und
- einen dritten kegelstumpfartigen Abschnitt (4e), welcher ausgehend von diesem zweiten Abschnitt auseinanderläuft, um einen Durchmesser D4 größer als D2 zu erreichen.

12. Anschlussvorrichtung (1') nach einem der vorhergehenden Ansprüche, **dadurch gekennzeichnet, dass** der Spangenkopf (6a') an seiner inneren Seite mit einem Verriegelungshilfselement (6f) versehen ist, beispielsweise in Steinform, welcher dazu ausgestaltet ist, in der verriegelten Position der Spange (6'') eine entsprechende Öffnung (3a) des weiblichen Verbinders (3') radial zu durchdringen, wobei er an dem Vorsprung (4b) des Ansatzstücks (4) in Anschlag kommt, wobei somit ein dritter Verriegelungspunkt des Ansatzstücks zusätzlich zu den zwei Spangenflügeln (6b) gebildet wird.

13. Verfahren zur Verriegelung einer Anschlussvorrichtung (1, 1') nach einem der vorhergehenden Ansprüche, **dadurch gekennzeichnet, dass** es umfasst:
a) ein fortschreitendes Einsetzen des männlichen Ansatzstücks (4) in das Innere des weiblichen Verbinders (3, 3'), welcher mit der Spange (6, 6', 6'') in der Ausgangsposition versehen ist, wobei ihre Flügel (6b) die Wand (7) durchdringen bis der Vorsprung (4b) des Ansatzstücks die Spangenflügel radial voneinander entfernt, und dann hinter diese Flügel gebracht wird, so dass die Letzteren in der Vorverriegelungsposition an diesem Vorsprung positioniert sind, dann
b) einzig in dieser Vorverriegelungsposition, ein auf den Spangenkopf (6a, 6a') radial nach innen ausgeübtes Drücken, welches die Spange, über eine Führung der Spangenenden durch die Führungsmittel (11, 12, 13, 14), aus der nicht verriegelten Position in die verriegelte Position bringt,
und bevorzugt **dadurch gekennzeichnet, dass** es beim Schritt b) eine Führung der zwei Spangenenden (6c) in einem Paar von ersten Rillen (11) des weiblichen Verbinders (3, 3') umfasst, so dass diese Enden bei ihrem Weg in die verriegelte Position sich radial an das Ansatzstück (4) annähern, um das radiale Montagespiel zwischen der Spange (6, 6', 6'') und dem Ansatzstück in der verriegelten Position zu minimieren.

14. Verfahren nach Anspruch 13, **dadurch gekennzeichnet, dass** es bei dem Schritt b) eine Führung im axialen Anschlag der zwei Spangenflügel (6b) in einem Paar von zweiten Rillen (14) des weiblichen Verbinders (3, 3') umfasst, so dass das axiale Montagespiel zwischen dem Ansatzstück (4) und dem weiblichen Verbinder in der verriegelten Position minimiert wird.

15. Verfahren nach Anspruch 13 oder 14, **dadurch gekennzeichnet, dass** es außerdem einen dritten Verriegelungspunkt für die Spange (6") an dem Ansatzstückvorsprung (4b) umfasst, welcher diejenigen ergänzt, die über die Spangenflügel (6b) realisiert sind und welcher erhalten wird, indem in der Eingangsposition, mit dem Spangenkopf (6a'), ein an diesem Kopf vorgesehenes Verriegelungshilfselement (6f) in einer Öffnung (3a) des weiblichen Verbinders (3') gleiten gelassen wird, wobei dieses Verriegelungselement beispielsweise in Steinform ist.
